Europäisches Patentamt

European Patent Office

Office européen des brevets

(19)

(11) Numéro de publication : **0 451 025 A1**

# (12) DEMANDE DE BREVET EUROPEEN

(21) Numéro de dépôt : **91400833.9**

(51) Int. Cl.⁵ : **A22C 9/00**

(22) Date de dépôt : **27.03.91**

(30) Priorité : 28.03.90 FR 9003962

(43) Date de publication de la demande :
**09.10.91 Bulletin 91/41**

(84) Etats contractants désignés :
**AT BE CH DE DK ES GB GR IT LI LU NL SE**

(71) Demandeur : **SOCIETE DE CONSTRUCTION L.B.**
**Z.A.C. des Prés de l'Hopital**
**F-94194 Villeneuve St-Georges Cédex (FR)**

(72) Inventeur : **Bourret, Jean Alain**
**21 rue de la Plaine**
**75020 Paris (FR)**

(74) Mandataire : **Habasque, Etienne Joel Jean-François et al**
**Cabinet Lavoix 2, Place d'Estienne d'Orves**
**F-75441 Paris Cédex 09 (FR)**

(54) **Dispositif attendrisseur notamment pour viande de boucherie.**

(57)    Ce dispositif attendrisseur notamment pour viande de boucherie, comportant un bâti (2) muni d'un socle (3) de réception de la viande et d'un ensemble (4) porte-lames, guidé en déplacement dans le bâti en direction du socle, sous la commande de moyens d'actionnement (5), est caractérisé en ce que ledit ensemble porte-lames (4) se présente sous la forme d'un bloc en U dont la partie inférieure (9) comporte deux branches de support (10, 11) parallèles et espacées, sur lesquelles reposent des parties en saillie (12a, 12b) ménagées à la partie supérieure des lames (12) et en ce qu'il est prévu des moyens amovibles (13,14) de blocage des lames coopérant avec la surface supérieure des lames (12) et les branches latérales du bloc en U, pour bloquer les lames en position.

EP 0 451 025 A1

Jouve, 18, rue Saint-Denis, 75001 PARIS

FIG. 2

La présente invention concerne un dispositif attendrisseur notamment pour viande de boucherie.

Les dispositifs de ce type comportent généralement un bâti muni d'un socle de réception de la viande et d'un ensemble porte-lames, guidé en déplacement dans le bâti en direction du socle, sous la commande de moyens d'actionnement, pour attendrir la viande.

L'une des principales caractéristiques de ces dispositifs doit être la facilité de montage et de démontage, en particulier des lames de l'ensemble porte-lames, pour permettre leur nettoyage et leur désinfection.

On connaît déjà dans l'état de la technique notamment d'après le document FR-A-2 464 029, un dispositif attendrisseur de ce type dans lequel l'ensemble porte-lames ou porte-couteaux est formé par un bloc porte-couteaux constitué par un cadre agencé pour recevoir et serrer un jeu de lames de couteaux amovibles et un plateau sous lequel est disposé ledit bloc, ce plateau comportant des glissières qui coopèrent avec des rails solidaires du cadre pour fixer ce cadre sur le plateau.

Cependant, ce dispositif présente un certain nombre d'inconvénients dans la mesure où le démontage des lames nécessite plusieurs opérations successives.

En effet, lors de ce démontage, on doit séparer le cadre de réception du jeu de lames de couteaux, du plateau, en le faisant par exemple coulisser dans les glissières, puis desserrer le cadre pour pouvoir en retirer les lames en vue de leur nettoyage.

On conçoit donc que toutes ces opérations augmentent le temps de nettoyage du dispositif et que la structure d'un tel dispositif est relativement complexe augmentant le prix de fabrication de celui-ci.

Le but de l'invention est donc de résoudre ces problèmes en proposant un dispositif qui soit simple, fiable et dans lequel le montage et le démontage des lames soient très rapides et très simples.

A cet effet, l'invention a pour objet un dispositif attendrisseur notamment pour viande de boucherie, comportant un bâti muni d'un socle de réception de la viande et d'un ensemble porte-lames, guidé en déplacement dans le bâti en direction du socle, sous la commande de moyens d'actionnement, caractérisé en ce que ledit ensemble porte-lames se présente sous la forme d'un bloc en U dont la partie inférieure comporte deux branches de support, parallèles et espacées, sur lesquelles reposent des parties en saillie ménagées à la partie supérieure des lames et en ce qu'il est prévu des moyens amovibles de blocage des lames coopérant avec la surface supérieure des lames et les branches latérales du bloc en U, pour bloquer les lames en position.

Avantageusement, les moyens de blocage comprennent au moins une tige de blocage dont les extrémités sont adaptées pour s'engager dans des gorges ménagées dans les branches latérales du bloc en U pour bloquer les lames.

L'invention sera mieux comprise à l'aide de la description qui va suivre, donnée uniquement à titre d'exemple et faite en se référant aux dessins annexés, sur lesquels :

– la Fig.1 représente une vue de face d'un dispositif attendrisseur selon l'invention, la partie droite de cette figure étant représentée en coupe; et

– la Fig.2 représente une vue de côté en coupe du dispositif représenté sur la Fig.1.

Ainsi qu'on peut le voir sur ces figures, un dispositif attendrisseur notamment pour viande de boucherie, désigné par la référence générale 1 sur ces figures, comporte de manière connue en soi, un bâti 2 muni d'un socle 3 de réception de la viande et d'un ensemble porte-lames 4, guidé en déplacement dans ce bâti en direction du socle, sous la commande de moyens d'actionnement 5.

Ces moyens d'actionnement 5 sont par exemple constitués par un levier de manoeuvre déplaçable par l'utilisateur et relié à l'ensemble porte-lames par tous moyens appropriés. Il va de soi que ces moyens de déplacement peuvent également être constitués par exemple par un vérin ou autre.

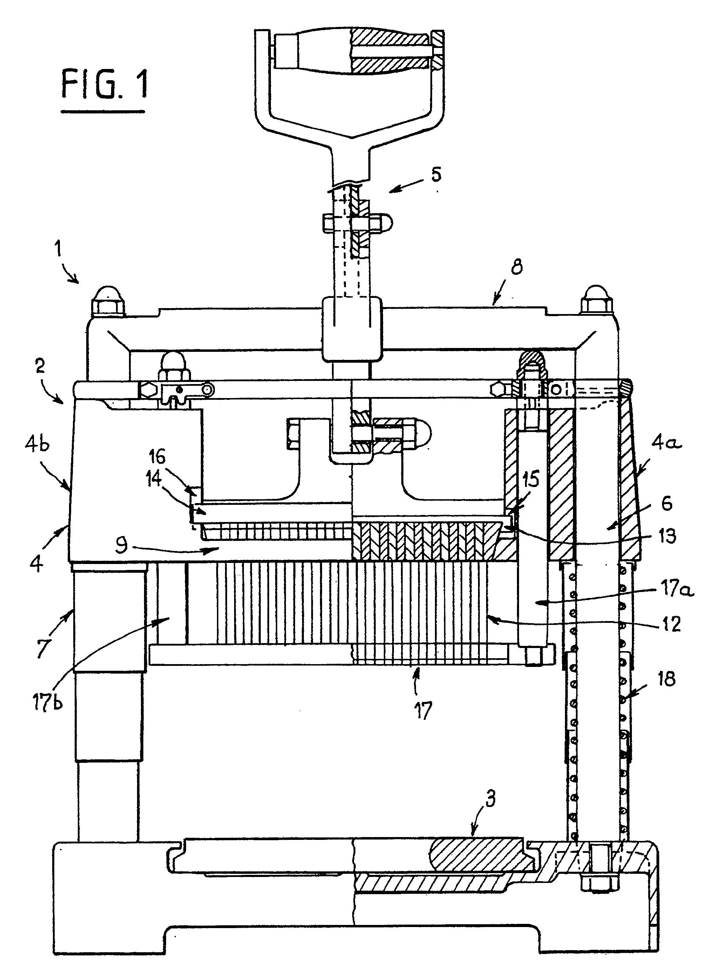

De manière classique également, et comme cela est représenté plus en détail sur la Fig.1, le bâti du dispositif selon l'invention comporte deux colonnes 6 et 7 le long desquelles se déplace l'ensemble porte-lames 4. Les extrémités inférieures de ces colonnes 6 et 7 sont reliées au socle de réception de la viande 3, tandis que les extrémités supérieures de celles-ci sont reliées par une traverse 8.

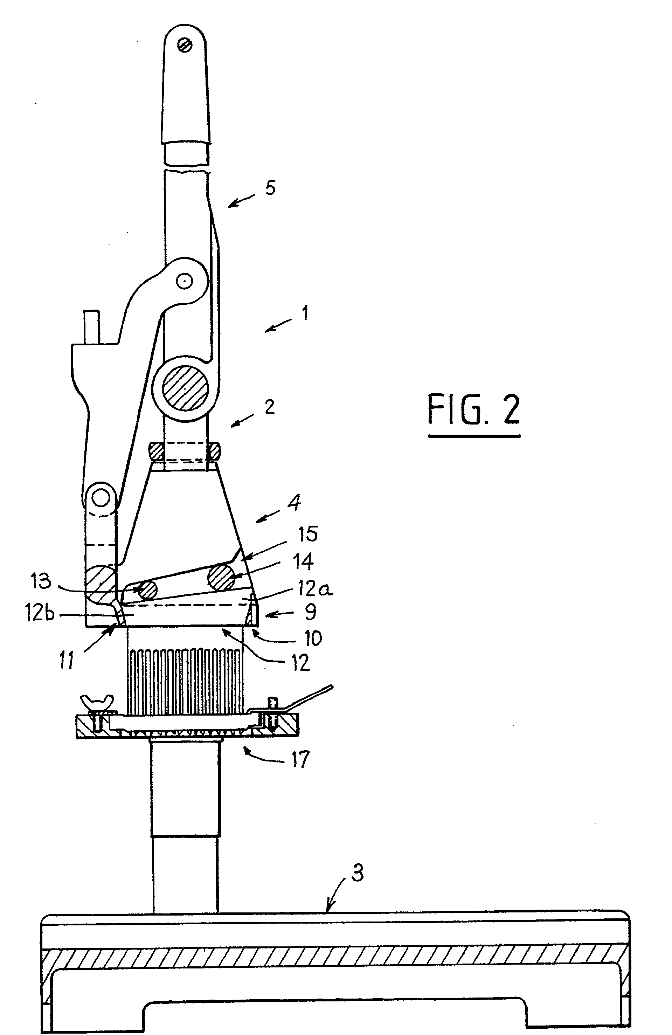

L'ensemble porte-lames 4 du dispositif selon l'invention se présente sous la forme d'un bloc en U dont la partie inférieure 9 comporte deux branches de support parallèles et espacées, respectivement 10 et 11 (Fig.2), sur lesquelles reposent des parties en saillie 12a, 12b ménagées à la partie supérieure des lames, par exemple 12. Les branches latérales du bloc en U constituant l'ensemble porte-lames 4, comportent des manchons tubulaires 4a et 4b disposés respectivement autour des colonnes 6 et 7.

Il est également prévu des moyens amovibles de blocage des lames, coopérant avec la surface supérieure de ces lames et les branches latérales du bloc en U pour bloquer les lames en position.

Comme on peut le voir plus particulièrement sur la Fig.2, ces moyens de blocage des lames peuvent être constitués par deux tiges 13 et 14.

Les extrémités de ces tiges sont par exemple adaptées pour s'engager dans des gorges respectivement 15 et 16 ménagées dans les branches latérales du bloc en U pour bloquer les lames en position. Ces gorges sont ouvertes à une extrémité pour permettre l'introduction et le retrait des tiges et comportent des rebords inclinés en direction du socle à partir de leur extrémité ouverte pour permettre le coincement des lames en position.

Il est à noter que la surface supérieure des lames peut également être inclinée en direction du socle à partir de l'extrémité ouverte des gorges et que les tiges de blocage peuvent être constituées par des tiges cylindriques de diamètres différents permettant leur répartition sur la surface supérieure des lames afin d'assurer un blocage équilibré de celles-ci.

Les parties en saillie des lames peuvent être formées par des rebords inclinés d'une embase surmoulée sur la lame elle-même, cette embase pouvant être constituée par exemple de matière plastique ou autre.

Ainsi qu'on peut le voir sur la Fig.1, les faces extérieures des lames d'extrémité du jeu de lames disposé dans l'ensemble porte-lames, peuvent également être inclinées de manière à réaliser un coincement des lames en position.

Ces lames sont également montées déplaçables à travers une grille 17 fixée sur le bâti par des tiges de support 17a et 17b et l'ensemble porte-lames peut être monté déplaçable dans le bâti à l'encontre de moyens élastiques 18 disposés autour des colonnes 6 et 7 tendant à le ramener vers la position escamotée représentée sur ces figures.

On conçoit donc que les lames du dispositif selon l'invention sont extrêmement faciles à monter et à démonter dans la mesure où il suffit de retirer les tiges de blocage 13 et 14 pour avoir accès directement à chaque lame en vue du nettoyage et de la désinfection.

Il va de soi bien entendu que les embases des lames peuvent présenter une forme différente de celle représentée sur ces figures, dans la mesure où les parties en saillie de celles-ci peuvent être constituées par des parties en saillie droites et non pas inclinées comme celles représentées.

**Revendications**

1. Dispositif attendrisseur notamment pour viande de boucherie, comportant un bâti (2) muni d'un socle (3) de réception de la viande et d'un ensemble (4) porte-lames, guidé en déplacement dans le bâti en direction du socle, sous la commande de moyens d'actionnement (5), caractérisé en ce que ledit ensemble porte-lames (4) se présente sous la forme d'un bloc en U dont la partie inférieure (9) comporte deux branches (10, 11) de support, parallèles et espacées, sur lesquelles reposent des parties en saillie (12a,12b), ménagées à la partie supérieure des lames (12) et en ce qu'il est prévu des moyens amovibles (13,14) de blocage des lames coopérant avec la surface supérieure des lames (12) et les branches latérales (4a,4b) du bloc en U, pour bloquer les lames en position.

2. Dispositif selon la revendication 1, caractérisé en ce que les moyens de blocage comprennent au moins une tige (13,14) de blocage dont les extrémités sont adaptées pour s'engager dans des gorges (15,16), ménagées dans les branches latérales du bloc en U pour bloquer les lames.

3. Dispositif selon la revendication 2, caractérisé en ce que les gorges présentent une extrémité ouverte pour l'introduction et le retrait de la ou de chaque tige.

4. Dispositif selon la revendication 3, caractérisé en ce que la ou chaque tige est cylindrique.

5. Dispositif selon la revendication 4, caractérisé en ce que les moyens de blocage comportent deux tiges de blocage (13,14) de diamètres différents réparties sur la surface supérieure des lames.

6. Dispositif selon la revendication 3, 4 ou 5, caractérisé en ce que la surface supérieure des lames (12) et les rebords des gorges (15,16) sont inclinés en direction du socle (3) à partir de l'extrémité ouverte des gorges.

7. Dispositif selon l'une quelconque des revendications précédentes, caractérisé en ce que les parties en saillie des lames (12) sont formées par des rebords d'une embase surmoulée sur la lame.

8. Dispositif selon la revendication 7, caractérisé en ce que les parties en saillie des lames sont formées par des rebords inclinés de l'embase.

# FIG. 1

FIG. 2

Office européen
des brevets

**RAPPORT DE RECHERCHE EUROPEENNE**

Numero de la demande

EP    91 40 0833

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | US-A-2 217 763 (MOLDAWSKY)<br>* page 2, colonne de gauche, ligne 23 - ligne 35; figures 4,5 *<br>--- | 1 | A22C9/00 |
| A | US-A-2 100 770 (WACHOWSKI)<br>* le document en entier *<br>--- | 1,2,4 | |
| A | FR-A-1 394 786 (BERTRAND)<br>* page 3, colonne de droite, alinéa 6 - page 4, colonne de gauche, alinéa 1 *<br>--- | 1 | |
| A | FR-A-1 018 796 (CUMIN)<br>* le document en entier *<br>--- | 1 | |
| A | FR-A-1 369 430 (TAMAIN)<br>--- | | |
| A | US-A-4 870 717 (HIRANO)<br>--- | | |
| A | US-A-3 900 918 (ALLINQUANT)<br>--- | | |
| A | US-A-3 727 267 (CLARK)<br>--- | | **DOMAINES TECHNIQUES RECHERCHES (Int. Cl.5 )** |
| A | US-A-2 061 799 (HINTZ)<br>------ | | A22C<br>B26D<br>A01F |

Le présent rapport a été établi pour toutes les revendications

| Lieu de la recherche | Date d'achèvement de la recherche | Examinateur |
|---|---|---|
| LA HAYE | 30 MAI 1991 | De Lamellieure |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P0402)